# FASCICULE DE BREVET EUROPEEN

(11) **EP 3 948 004 B1**
(45) Date de publication et mention de la délivrance du brevet: **10.05.2023**
(21) Numéro de dépôt: 20713052.7
(22) Date de dépôt: 27.03.2020
(51) Int. Cl.: F16D 65/00

(54) **SYSTEME DE FREINAGE AVEC SOUFFLAGE DANS RAINURE DE LA GARNITURE**
BREMSSYSTEM MIT LUFTEINBLASUNG IN DER NUT IN DER AUSKLEIDUNG
BRAKING SYSTEM WITH AIR BLOWING IN THE GROOVE IN THE LINING

(30) Priorité: 28.03.2019 FR 1903216
(43) Date de publication de la demande: 09.02.2022
(73) Titulaire: Tallano Technologie, 75015 Paris (FR)
(72) Inventeur: ADAMCZAK, Loïc, 92100 BOULOGNE BILLANCOURT (FR); LE BOULAIRE, Thibaut, 92100 BOULOGNE BILLANCOURT (FR)
(74) Mandataire: Plasseraud IP
(86) Numéro de dépôt international: PCT/EP2020/058815
(87) Numéro de publication internationale: WO 2020/193775

(56) Documents cités:
- FR-A1- 3 057 040
- GB-A- 2 533 476

## Description

La présente invention est relative aux systèmes de freinage non polluants, destinés à être utilisés dans des machines comportant un élément rotatif dont on veut freiner la rotation, tels que par exemple des véhicules routiers ou ferroviaires, des éoliennes.

Dans de tels systèmes de freinage, des particules et poussières sont émises par le freinage à friction comme résultat de l'abrasion de plaquettes de frein contre l'élément rotatif. Cet élément rotatif est par exemple la roue du véhicule, ou un disque entrainé par la roue du véhicule. Il est connu que ces particules dispersées dans le milieu ambiant sont nocives pour la santé des individus. En outre la progression des motorisations électriques pour les véhicules automobiles a renforcé le besoin de traiter les particules et poussières résultant de l'abrasion des systèmes de freinage à friction.
Il existe donc un besoin de capter ces particules et poussières avant qu'elles soient libérées dans le milieu ambiant.

Ainsi, on connait le document FR 3 057 040 qui décrit un système de freinage comportant une plaquette de frein 10, cette plaquette comprenant une semelle 1 avec une première face 13 et une deuxième face 14, et une garniture 2 en matériau de friction fixée sur la première face 13, la garniture 2 étant délimitée par une face de friction 26, une face de fixation 20, un bord intérieur 23, un bord extérieur 24, un bord arrière 21, et un bord avant 22. La garniture 2 est pourvue d'au moins une rainure de collecte 3 qui est ouverte sur la face de friction 26, et qui débouche à sa première extrémité 31 du côté du bord intérieur 23, et à sa seconde extrémité 32 du côté du bord extérieur 24. La semelle 1 comporte un trou 17 en communication fluide avec la rainure de collecte 3. Le trou 17 est relié à un système d'aspiration par un tuyau d'aspiration 40 apte à aspirer l'air et les particules et poussières circulant dans la rainure 3.

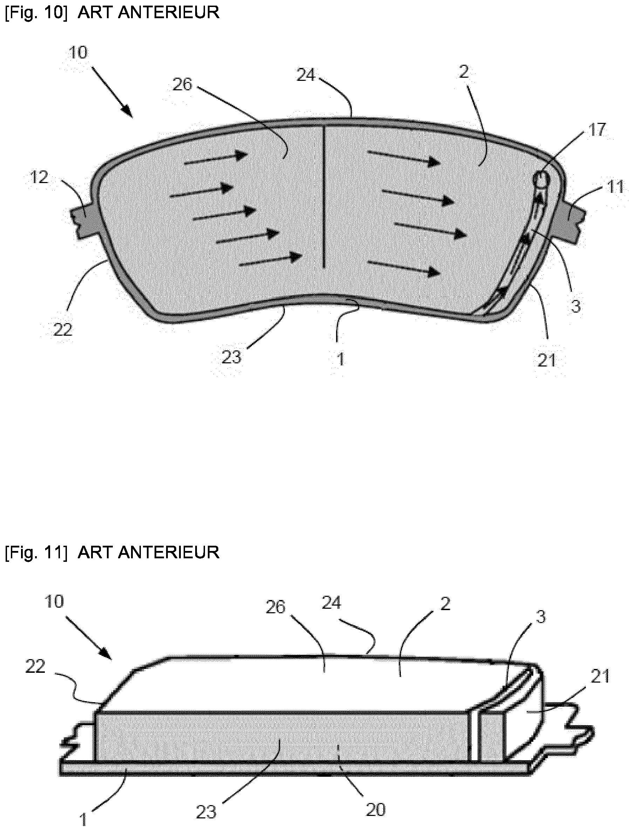

Un tel système de freinage est illustré en figures 10 et 11, et représente l'art antérieur.

Ce système de freinage présente cependant des inconvénients.

En effet, des particules et poussières continuent à s'échapper en quantité indésirable durant les phases de freinage.

### Description de l'invention

La présente invention vise à remédier à ces inconvénients.

L'invention vise à proposer un système de freinage pour lequel la captation des particules et poussières émises par la garniture et l'élément rotatif soit optimisée, et dont la construction soit la plus simple possible.

Ce but est atteint grâce au fait que le système de freinage comporte en outre un système d'aspiration qui comprend un tuyau d'aspiration par lequel l'air est apte à être aspiré et un tuyau de soufflage par lequel l'air est apte à être soufflé, l'orifice d'entrée d'air du tuyau d'aspiration étant situé en regard d'une extrémité de la au moins une rainure choisie entre la première extrémité et la seconde extrémité, et l'orifice de sortie d'air du tuyau de soufflage étant situé en regard de l'autre extrémité de la rainure choisie entre la première extrémité et la seconde extrémité.

Grâce à ces dispositions, la récupération des particules et poussières par le système d'aspiration est plus efficace, car le soufflage et l'aspiration simultanées de l'air permettent de guider les particules et poussières vers le tuyau d'aspiration. La relâche de ces particules et poussières dans l'atmosphère est donc minimisée.

Avantageusement ni le tuyau d'aspiration ni le tuyau de soufflage ne sont en contact avec la garniture ou la semelle.

Ainsi, il n'existe pas de génération, après la phase de freinage, d'un couple résiduel plus ou moins important lorsque les garnitures et les plaquettes s'écartent de l'élément rotatif.

Par exemple, l'orifice d'entrée d'air du tuyau d'aspiration est situé en regard de la seconde extrémité, et l'orifice de sortie d'air du tuyau de soufflage est situé en regard de la première extrémité.

Ainsi, l'air circule dans la rainure depuis le bord intérieur vers le bord extérieur de la garniture. Ce sens étant le sens naturel (sans aspiration/soufflage) de circulation de l'air dans la rainure sous l'effet de la force centrifuge, la captation des particules et poussières dans le tuyau d'aspiration est plus efficace.

Avantageusement, la première extrémité débouche sur le bord intérieur.

Ainsi, l'air s'échappe de la rainure (vers le tuyau d'aspiration) dans le prolongement de celle-ci, ce qui rend l'aspiration plus efficace. De plus, le tuyau d'aspiration se situant dans le plan principal de la garniture, il n'est pas nécessaire de modifier l'étrier pour intégrer ce tuyau dans la structure du système de freinage.

Avantageusement, l'orifice d'entrée d'air du tuyau d'aspiration est situé en regard de la première extrémité, et l'orifice de sortie d'air du tuyau de soufflage est situé en regard de la seconde extrémité.

Ainsi, l'air circule dans la rainure depuis le bord extérieur vers le bord intérieur de la garniture.

Avantageusement, la seconde extrémité débouche sur le bord extérieur.

Ainsi, l'air s'échappe de la rainure (vers le tuyau d'aspiration) dans le prolongement de celle-ci, ce qui rend l'aspiration plus efficace. De plus, le tuyau d'aspiration se situant dans le plan principal de la garniture, il n'est pas nécessaire de modifier l'étrier pour intégrer ce tuyau dans la structure du système de freinage.

Avantageusement, le système d'aspiration comporte une pompe et un filtre, la pompe, le filtre, le tuyau d'aspiration et le tuyau de soufflage formant un circuit continu.

Ainsi, le système d'aspiration est simplifié. De plus, l'air filtré par le filtre est réutilisé pour être soufflé dans la rainure, ce qui fait passer plusieurs fois les particules (qui n'ont pas déjà été capturées par le filtre) au travers du filtre. La probabilité de stockage des particules dans ce filtre est donc augmentée.

Avantageusement, la au moins une rainure est située à proximité du bord arrière.

Ainsi, la captation des particules et poussières par la rainure est optimisée, ces particules et poussières ayant tendance à circuler de l'avant vers l'arrière de la garniture, puisque ce sens de circulation est le sens de déplacement de l'élément rotatif par rapport à la garniture au repos.

Avantageusement, la garniture est pourvue d'une deuxième rainure qui est située sensiblement à mi-distance entre le bord avant et le bord arrière.

Ainsi, le comportement vibratoire de l'ensemble garnitures-disque lors du freinage est amélioré.

Avantageusement, la garniture est pourvue d'une rainure supplémentaire qui est située à proximité du bord avant.

Ainsi, le système selon l'invention fonctionne de façon aussi efficace dans les deux sens de rotation de l'élément rotatif par rapport à la garniture, ce qui est avantageux pour les véhicules qui doivent freiner dans les deux sens, tels que les véhicules ferroviaires.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] est une vue de dessus d'une plaquette de frein d'un système de freinage selon l'invention,
[Fig. 2] est une vue en perspective d'une plaquette de frein d'un système de freinage selon l'invention,
[Fig. 3] est une vue en coupe le long de la rainure de collecte d'une plaquette de frein d'un système de freinage selon l'invention, selon la ligne III-III de la figure 2,
[Fig. 4] est une vue en coupe le long de la rainure de collecte selon une variante,
[Fig. 5] est une vue en perspective d'une plaquette de frein d'un système de freinage selon un autre mode de réalisation de l'invention,
[Fig. 6] est une vue en coupe le long de la rainure de collecte d'une plaquette de frein d'un système de freinage selon l'invention, selon la ligne VI-VI de la figure 5,
[Fig. 7] est une vue de dessus d'une plaquette de frein d'un système de freinage selon encore un autre mode de réalisation de l'invention,
[Fig. 8] est une vue en perspective d'un système de freinage selon l'invention monté sur un disque rotatif,
[Fig. 9] est une vue schématique d'un exemple d'un système d'aspiration d'un dispositif de freinage selon l'invention,
[Fig. 10], déjà décrite, représente une plaquette selon l'art antérieur en vue de dessus,
[Fig. 11], déjà décrite, représente une plaquette selon l'art antérieur en perspective.

### Description détaillée de l'invention

La présente invention concerne un système de freinage qui comporte une plaquette de frein 10 d'un frein pour le freinage d'un élément rotatif 9 d'une machine. L'invention est décrite ci-dessous dans le cas où la machine est un véhicule routier où ce frein est un frein à disque. Cependant l'invention s'applique aussi bien au cas d'une plaquette de frein dans un frein à semelle qui frotte sur une roue, utilisé dans les véhicules sur rails (ferroviaire), ou au cas d'une plaquette de frein utilisée dans toute autre machine industrielle (par exemple dans le cas d'une éolienne). Dans tous les cas, le freinage d'un élément rotatif de la machine est réalisé par le frottement de la plaquette de frein sur cet élément rotatif lors de sa rotation.

Dans un frein à disque, le freinage s'effectue par friction entre un disque (qui est l'élément rotatif 9) qui est solidaire d'une roue du véhicule, et deux plaquettes de frein 10 qui sont plaquées de part et d'autre de ce disque 9 afin de le prendre en sandwich. Le disque 9 s'étend dans un plan principal et a pour axe de rotation un axe A qui est perpendiculaire à ce plan principal.

Chacune des plaquettes 10 s'étend dans ce plan principal de telle sorte que l'épaisseur d'une plaquette 10 s'étend selon l'axe de rotation A.

Le disque 9 tourne autour de l'axe de rotation A avec un sens de rotation FW, ce qui définit une direction tangentielle T qui est tangente à la circonférence du disque 9 et orientée dans le sens de rotation FW, et une direction radiale R orthogonale à l'axe de rotation A dans le plan principal du disque 9.

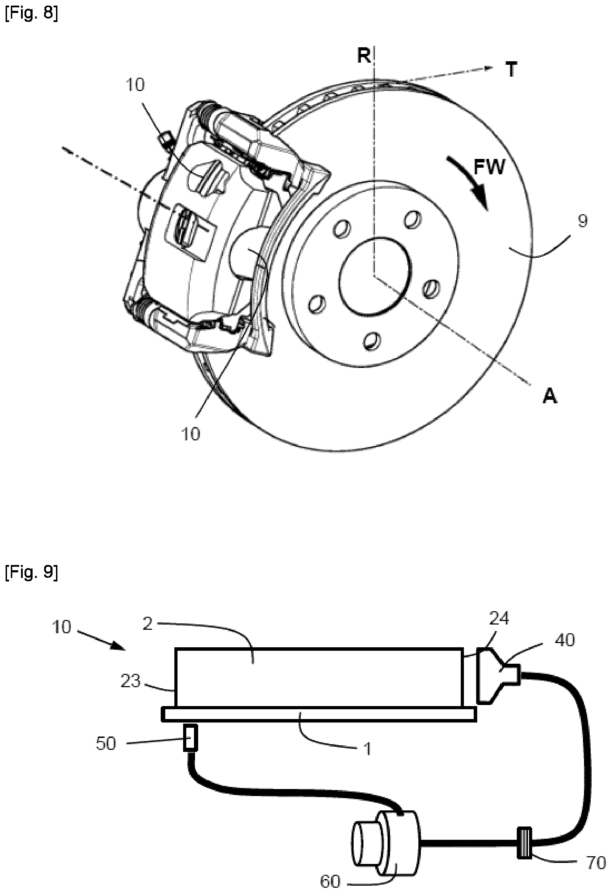

Ces éléments sont indiqués sur la figure 8, qui représente le dispositif de freinage monté sur le disque 9.

Dans la description qui suit les termes « intérieur » et « extérieur » désignent les bords ou zones de la plaquette de frein 10 (ou de ses composants) qui sont situés respectivement le plus proche et le plus éloigné de l'axe de rotation A, et les termes « avant » et « arrière » désignent les bords ou zones de la plaquette de frein 10 (ou de ses composants) qui sont situés en amont et en aval respectivement par rapport au sens de circulation des particules 28 émises par la garniture 2 (décrite ci-dessous) qui est également le sens de rotation FW.

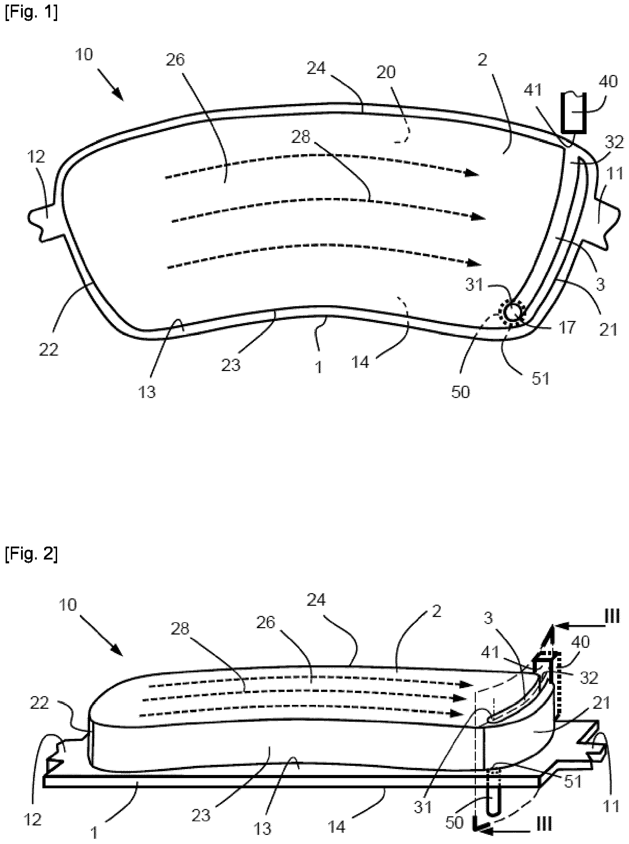

Comme illustré sur les figures 1 et 2, une plaquette de frein 10 comprend une semelle 1, aussi appelée embase. La semelle 1 est par exemple réalisée en matériau métallique. La semelle 1 est une plaque plane d'épaisseur sensiblement constante (par exemple entre 3 et 7 mm) dont la forme générale dans son plan principal est trapézoïdale avec des bords rectilignes ou courbes.

La semelle 1 comprend une première face 13 sur laquelle est fixée une garniture 2, et une deuxième face 14 qui est opposée à la première face 13.

La semelle 1 comprend également deux tenons (11, 12), qui s'étendent dans le plan de la semelle 1 à deux extrémités latérales de celle-ci, et qui servent au maintien et au guidage de la plaquette 10.

La plaquette de frein 10 comprend en outre une garniture 2 constituée d'un matériau de friction. Par exemple ce matériau est un matériau appelé « ferodo ».

La garniture 2 est délimitée par une face de friction 26 (face « frottante »), une face de fixation 20 opposée à la face de friction 26 (ces deux faces étant parallèles) et fixée sur la semelle 1, un bord intérieur 23, un bord extérieur 24, un bord arrière 21 et un bord avant 22. Les bords extérieur 24, arrière 21, et avant 22 sont convexes ou rectilignes, le bord intérieur 23 est concave ou rectiligne.

La face de friction 26 se rapproche progressivement de la semelle 1 au fur et à mesure de l'usure de la garniture 2. L'épaisseur de la garniture 2 (mesurée selon l'axe de rotation A) diminue par conséquent avec son usure.

En fonctionnement, la garniture 2 (et l'élément rotatif 9) relâche des particules 28 à cause de la friction entre la garniture 2 et le disque 9. Les trajets des particules 28 le long de la face de friction 26 sont représentés en pointillés sur les figures 1 et 2.

La garniture 2 est pourvue d'au moins une rainure de collecte 3 ouverte sur la face de friction 26.

La rainure 3 comporte une première extrémité 31 et une seconde extrémité 32. La rainure 3 débouche à sa première extrémité 31 du côté du bord intérieur 23, et à sa seconde extrémité 32 du côté du bord extérieur 24.

Par « la rainure 3 débouche à son extrémité du côté d'un bord », on signifie que la rainure 3 débouche à cette extrémité à proximité du bord, c'est-à-dire soit au travers de la semelle 1, soit directement sur ce bord.

Dans tous les cas, la rainure 3 débouche à chacune de ses extrémités hors de la face de friction 26.

La profondeur de la (ou des) rainure 3 est par exemple égale à la hauteur de la garniture 2, c'est-à-dire que le fond de la rainure 3 coïncide avec la première face 13 de la semelle 1. Alternativement la profondeur de la (ou des) rainure 3 est inférieure à la hauteur de la garniture 2.

Par exemple, la (ou les) rainure de collecte 3 a une section rectangulaire constante de son extrémité amont à son extrémité aval, et est donc d'épaisseur constante.

Par exemple, la rainure de collecte 3 est située à proximité du bord arrière 21. Cette configuration permet de collecter dans cette rainure 3 les particules/poussières issues du freinage de façon plus efficace, étant donné que les particules circulent naturellement de l'avant vers l'arrière de la garniture 2. En effet, ce sens de circulation est le sens de déplacement de l'élément rotatif 9 par rapport à la garniture 2 au repos.

En option, la garniture 2 comporte en outre une deuxième rainure de collecte 3 qui est située sensiblement à mi-distance entre le bord avant 22 et le bord arrière 21.

Cette position de la deuxième rainure de collecte 3 permet de minimiser les vibrations indésirables de la garniture 2.

Le système de freinage comporte un système d'aspiration qui comprend un tuyau d'aspiration 40 par lequel l'air est aspiré, et un tuyau de soufflage 50 par lequel l'air est soufflé. Le tuyau d'aspiration 40 comporte un orifice d'entrée 41 d'air qui est situé en regard d'une extrémité de la au moins une rainure 3 choisie entre sa première extrémité 31 et sa seconde extrémité 32. Le tuyau de soufflage 50 comporte un orifice de sortie 51 d'air qui est situé en regard de l'autre extrémité de la au moins une rainure 3 choisie entre sa première extrémité 31 et sa seconde extrémité 32.

On décrit maintenant un premier mode de réalisation, en référence aux figures 1 à 4, dans lequel l'orifice d'entrée 41 d'air du tuyau d'aspiration 40 est situé en regard de la seconde extrémité 32, et l'orifice de sortie 51 d'air du tuyau de soufflage 50 est situé en regard de la première extrémité 31.

Ce mode de réalisation présente l'avantage que la circulation de l'air forcée par le système d'aspiration s'effectue dans le même sens que la circulation naturelle de l'air dans la rainure 3. En effet, sous l'influence de la force centrifuge, l'air circule naturellement depuis la première extrémité 31 vers la seconde extrémité 32. Le système d'aspiration est donc plus efficace.

Comme illustré en figures 1 à 3, la rainure 3 ne débouche pas directement sur le bord intérieur 23. Une paroi formée par la garniture 2 sépare donc la première extrémité 31 du bord intérieur 23. La rainure 3 débouche sur l'extérieur par un trou 17 dans la semelle 1. Ce trou 17 met en communication la première face 13 et la deuxième face 14 de la semelle 1. L'orifice de sortie 51 du tuyau de soufflage 50 est en regard de l'orifice du trou 17 qui débouche sur la deuxième face 14. L'air soufflé par le tuyau de soufflage 50 traverse la semelle 1 par le trou 17, débouche dans la rainure 3, et circule depuis la première extrémité 31 vers la seconde extrémité 32. La seconde extrémité 32, qui s'ouvre sur le bord extérieur 24, a pour section transversale celle de la rainure 3. L'orifice d'entrée 41 d'air du tuyau d'aspiration 40 se situe dans le prolongement de la rainure 3. L'air circulant dans la rainure 3 pénètre dans le tuyau d'aspiration 40 par cet orifice d'entrée 41.

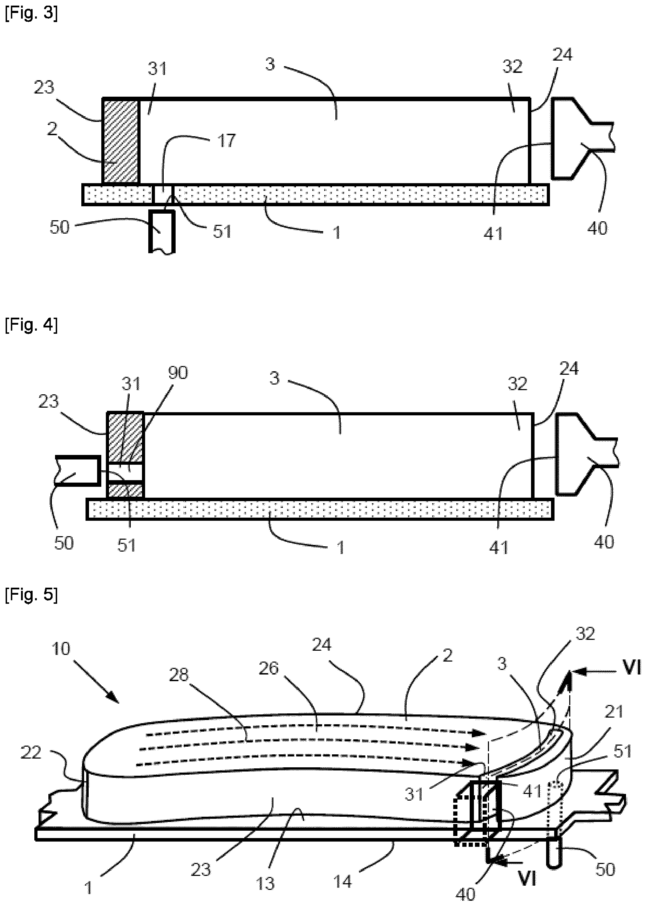

En variante, la rainure 3 est conformée au niveau du bord intérieur 23 en un canal 90 qui met en communication le reste de la rainure 3 et le bord intérieur 23, comme représenté en figure 4. Ainsi, ce canal 90 présente une paroi latérale continue entourée de garniture 2, dont la première extrémité s'ouvre sur le reste de la rainure 3 et dont la seconde extrémité (qui est ainsi la première extrémité 31 de la rainure 3) s'ouvre sur le bord intérieur 23. L'orifice de sortie 51 du tuyau de soufflage 50 est en regard de la seconde extrémité du canal 90. L'air circule depuis le tuyau de soufflage 50 et vers le tuyau d'aspiration 40 directement dans le prolongement de la rainure (selon la direction longitudinale de la rainure 3), ce qui augmente l'efficacité du système d'aspiration. Cette configuration améliore la circulation de l'air dans la rainure 3, y compris au fur et à mesure de l'usure de la garniture 2. Avantageusement, le canal 90 est le plus proche possible de la semelle 1 afin de maximiser l'épaisseur utile de la garniture 2 en fonctionnement.

De plus, il n'est pas nécessaire de modifier la semelle 1 (par exemple par perçage, puisque la semelle 1 est continue sur toute la longueur de la rainure 3), ce qui simplifie la fabrication du système de freinage.

Le canal 90 est de section constante, par exemple de section circulaire. Alternativement, le canal 90 présente une section de sa première extrémité qui est supérieure à sa section de sa seconde extrémité de telle sorte que l'air pénètre plus aisément dans la rainure 3 par le canal 90.

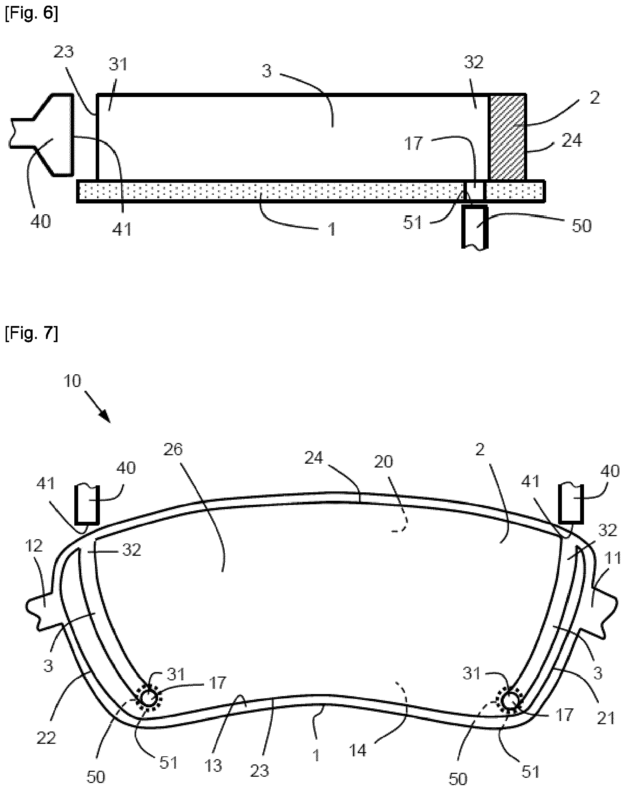

On décrit maintenant un deuxième mode de réalisation en référence aux figures 5 et 6, dans lequel l'orifice d'entrée 41 d'air du tuyau d'aspiration 40 est situé en regard de la première extrémité 31, et l'orifice de sortie 51 d'air du tuyau de soufflage 50 est situé en regard de la seconde extrémité 32.

La circulation de l'air qui est forcée par le système d'aspiration s'effectue depuis la seconde extrémité 32 vers la première extrémité 31.

La rainure 3 ne débouche pas directement sur le bord extérieur 24. Une paroi formée par la garniture 2 sépare donc la seconde extrémité 32 du bord extérieur 24. La rainure 3 débouche sur l'extérieur par un trou 17 dans la semelle 1. Ce trou 17 met en communication la première face 13 et la deuxième face 14 de la semelle 1. L'orifice de sortie 51 du tuyau de soufflage 50 est en regard de l'orifice du trou 17 qui débouche sur la deuxième face 14. L'air soufflé par le tuyau de soufflage 50 traverse la semelle 1 par le trou 17, débouche dans la rainure 3, et circule depuis la seconde extrémité 32 vers la première extrémité 31. La première extrémité 31, qui s'ouvre sur le bord intérieur 23, a pour section transversale celle de la rainure 3. L'orifice d'entrée 41 d'air du tuyau d'aspiration 40 se situe dans le prolongement de la rainure 3. L'air circulant dans la rainure 3 pénètre dans le tuyau d'aspiration 40 par cet orifice d'entrée 41.

En variante, la rainure 3 est conformée au niveau du bord extérieur 24 en un canal 90 qui met en communication le reste de la rainure 3 et le bord intérieur 24. Ainsi, la seconde extrémité 32 de la rainure 3 débouche directement sur le bord extérieur 24 par le canal 90. L'orifice de sortie 51 du tuyau de soufflage 50 est en regard de l'extrémité du canal 90 au niveau du bord extérieur 24. Le soufflage s'effectue donc dans la rainure 3 depuis le tuyau de soufflage 50 par le bord extérieur 24 et au travers du canal 90.

La semelle 1 est continue tout le long de la rainure 3, de telle sorte que l'air ne traverse pas la semelle 1.

Avantageusement, dans tous les modes de réalisation, il n'y a pas de contact du tuyau d'aspiration 40 et du tuyau de soufflage 50 avec la garniture 2 ou la semelle 1. Ainsi, il n'existe pas de génération, après la phase de freinage, d'un couple résiduel plus ou moins important lorsque les garnitures 2 et les semelles 1 s'écartent de l'élément rotatif, ce couple résiduel étant généré par le fait qu'un tuyau est en contact avec la garniture 2 ou la semelle 1.

Dans cette configuration, le tuyau d'aspiration 40 et le tuyau de soufflage 50 sont situés en dehors de la zone de déplacement de la semelle 1 (déplacement dont l'amplitude résulte de l'usure de la garniture 2 durant la vie de la plaquette de frein 10) de telle sorte que ni le tuyau d'aspiration 40 ni le tuyau de soufflage 50 ne sont en contact avec la garniture 2 ou la semelle 1 durant toute la durée de vie de la plaquette de frein 10.

Dans cette configuration, avantageusement, l'orifice d'entrée 41 du tuyau d'aspiration 40 et l'orifice de sortie 51 du tuyau de soufflage 50 sont en outre situés aussi près que possible du bord intérieur 23 ou du bord extérieur 24 selon le cas, de façon à maximiser le passage de l'air entre la rainure 3 d'une part et le tuyau d'aspiration 40 et le tuyau de soufflage 50 d'autre part.

La figure 7 illustre le cas où la garniture 2 est pourvue d'une rainure 3 supplémentaire qui est située à proximité du bord avant 22, en plus de la première rainure 3 située à proximité du bord arrière 21. La garniture 2 comporte alors deux rainures 3.

Le dispositif d'aspiration comprend donc un premier tuyau de soufflage 50 et un premier tuyau d'aspiration 40 qui permettent de faire circuler l'air dans la première rainure 3, et un deuxième tuyau de soufflage 50 et un deuxième tuyau d'aspiration 40 qui permettent de faire circuler l'air dans la rainure 3 supplémentaire. Chacun de ces tuyaux est relié à un élément, qui fait partie du dispositif d'aspiration, apte à faire circuler l'air dans chacune des rainures 3.

Cette configuration avec double rainure 3 est adapté aux véhicules, tels que des véhicules ferroviaires, qui sont soumis à des freinages dans les deux sens. En effet, dans ce cas les particules 28 libérées par la friction de la garniture 2 sur l'élément rotatif peuvent circuler soit du bord avant 22 vers le bord arrière 21, soit du bord arrière 21 vers le bord avant 22. La présence de deux rainures 3 permet de capter les particules dans une rainure 3 quel que soit le sens de freinage du véhicule.

Selon encore un autre mode de réalisation, la garniture 2 comporte une autre rainure 3 (appelée deuxième rainure) qui est située sensiblement à mi-distance entre le bord avant 22 et le bord arrière 21, cette deuxième rainure 3 ayant été décrite ci-dessus. La rainure 3 supplémentaire qui est située à proximité du bord avant 22 est alors une troisième rainure 3. Ce mode de réalisation permet ainsi à la fois de minimiser les vibrations indésirables de la garniture 2 et de capter les particules dans une rainure 3 quel que soit le sens de freinage du véhicule.

D'une manière générale, le système d'aspiration comporte un élément apte à souffler de l'air dans le tuyau de soufflage 50 et un élément (qui est le même où un élément séparé) apte à aspirer de l'air par le tuyau d'aspiration 40.

La figure 9 illustre le cas d'un système d'aspiration qui comporte une pompe 60 (qui est alors l'élément ci-dessus) et un filtre 70, la pompe 60, le filtre 70, le tuyau d'aspiration 40 et le tuyau de soufflage 50 formant un circuit continu. Par exemple la pompe 60 est unique.

Ainsi, la pompe 60, le filtre 70, le tuyau d'aspiration 40 et le tuyau de soufflage 50 forment avec la rainure 3 un circuit dans lequel l'air circule en circuit fermé. L'air filtré par le filtre 70 est ainsi réutilisé pour être soufflé dans la rainure 3, ce qui fait passer plusieurs fois les particules (qui n'ont pas déjà été capturées par le filtre 70) au travers du filtre 70. La probabilité de stockage des particules dans ce filtre 70 est donc augmentée, et quantité de particules et poussières relâchées dans l'atmosphère est diminuée.

Selon une variante, le système d'aspiration comporte une pompe 60, un filtre 70, le tuyau d'aspiration 40 et le tuyau de soufflage 50, et une vanne de décharge de telle sorte à former un circuit qui est partiellement ouvert. Cette configuration présente l'avantage qu'il est possible d'ajuster la vitesse de l'air de soufflage à la vitesse d'aspiration afin d'optimiser la collecte des particules et poussières dans la rainure 3.

Dans cette variante, le système d'aspiration comporte une unité de commande qui est apte à piloter la vanne de décharge qui est une électrovanne. On peut alors optimiser le système. Ainsi, en fonction du régime d'accélération ou de décélération du véhicule, l'unité de commande peut supprimer le soufflage. Par exemple, lors d'une accélération du véhicule suivant immédiatement un freinage, il est préférable de ne pas souffler dans la rainure 3 au risque de disperser les particules qui y sont présentes, mais seulement d'aspirer. Dans ce cas, l'unité de commande ouvre la vanne de décharge afin d'aspirer dans la rainure 3 sans y souffler.

Selon une autre variante, l'élément apte à aspirer de l'air par le tuyau d'aspiration 40 est un bloc situé sur le trajet de l'air dans le tuyau d'aspiration 40 en aval de l'orifice d'entrée 41 et qui est conformé avec une entrée amont de section inférieure à sa sortie aval.

## Revendications

1. Système de freinage comportant une plaquette de frein (10), ladite plaquette comprenant une semelle (1) avec une première face (13) et une deuxième face (14), et une garniture (2) en matériau de friction fixée sur ladite première face (13), la garniture (2) étant délimitée par une face de friction (26), une face de fixation (20), un bord intérieur (23), un bord extérieur (24), un bord arrière (21), un bord avant (22), ladite garniture (2) étant pourvue d'au moins une rainure de collecte (3) qui est ouverte sur la face de friction (26), et qui débouche à sa première extrémité (31) du côté dudit bord intérieur (23), et à sa seconde extrémité (32) du côté dudit bord extérieur (24), ledit système de freinage étant **caractérisé en ce qu'**il comporte en outre un système d'aspiration qui comprend un tuyau d'aspiration (40) par lequel l'air est apte à être aspiré, et un tuyau de soufflage (50) par lequel l'air est apte à être soufflé, l'orifice d'entrée (41) d'air dudit tuyau d'aspiration (40) étant situé en regard d'une extrémité de ladite au moins une rainure (3) choisie entre ladite première extrémité (31) et ladite seconde extrémité (32), et l'orifice de sortie (51) d'air dudit tuyau de soufflage (50) étant situé en regard de l'autre extrémité de ladite au moins une rainure (3) choisie entre ladite première extrémité (31) et ladite seconde extrémité (32).

2. Système de freinage selon la revendication 1, **caractérisé en ce que** ni le tuyau d'aspiration (40) ni le tuyau de soufflage (50) ne sont en contact avec ladite garniture (2) ou ladite semelle (1).

3. Système de freinage selon la revendication 1 ou 2, **caractérisé en ce que** l'orifice d'entrée (41) d'air dudit tuyau d'aspiration (40) est situé en regard de ladite seconde extrémité (32), et l'orifice de sortie (51) d'air dudit tuyau de soufflage (50) est situé en regard de ladite première extrémité (31).

4. Système de freinage selon la revendication 3, **caractérisé en ce que** ladite première extrémité (31) débouche sur ledit bord intérieur (23).

5. Système de freinage selon la revendication 1 ou 2, **caractérisé en ce que** l'orifice d'entrée (41) d'air dudit tuyau d'aspiration (40) est situé en regard de ladite première extrémité (31), et l'orifice de sortie (51) d'air dudit tuyau de soufflage (50) est situé en regard de ladite seconde extrémité (32).

6. Système de freinage selon la revendication 5, **caractérisé en ce que** ladite seconde extrémité (32) débouche sur ledit bord extérieur (24).

7. Système de freinage selon l'une quelconque des revendications 1 à 6, **caractérisé en ce que** ledit système d'aspiration comporte une pompe (60) et un filtre (70), ladite pompe (60), ledit filtre (70), ledit tuyau d'aspiration (40) et ledit tuyau de soufflage (50) formant un circuit continu.

8. Système de freinage selon l'une quelconque des revendications 1 à 7, **caractérisé en ce que** ladite au moins une rainure (3) est située à proximité dudit bord arrière (21).

9. Système de freinage selon la revendication 8, **caractérisé en ce que** ladite garniture (2) est pourvue d'une deuxième rainure (3) qui est située sensiblement à mi-distance entre ledit bord avant (22) et ledit bord arrière (21) .

10. Système de freinage selon la revendication 8 ou 9, **caractérisé en ce que** ladite garniture (2) est pourvue d'une rainure (3) supplémentaire qui est située à proximité dudit bord avant (22).

## Patentansprüche

1. Bremssystem mit einem Bremsbelag (10), wobei der Bremsbelag einen Reibbelagsträger (1) mit einer ersten Seite (13) und einer zweiten Seite (14), und einen, an der ersten Seite (13) befestigten Einsatz (2) aus Reibmaterial aufweist, wobei der Einsatz (2) durch eine Reibfläche (26), eine Befestigungsfläche (20), einen inneren Rand (23), einen äußeren Rand (24), einen hinteren Rand (21) und einen vorderen Rand (22) begrenzt ist, wobei der Einsatz (2) mit mindestens einer Sammelnut (3) versehen ist, die an der Reibfläche (26) offen ist und an ihrem ersten Ende (31) auf der Seite des inneren Randes (23) und an ihrem zweiten Ende (32) auf der Seite des äußeren Randes (24) mündet,
wobei das Bremssystem **dadurch gekennzeichnet ist,**
**dass** es außerdem ein Saugsystem aufweist, welches eine Saugleitung (40), die geeignet ist, darüber Luft anzusaugen, und eine Blasleitung (50), die geeignet ist, darüber Luft auszublasen, umfasst, wobei die Lufteintrittsöffnung (41) der Saugleitung (40) gegenüber einem Ende der mindestens einen Sammelnut (3) beliebig zwischen dem ersten Ende (31) und dem zweiten Ende (32) angeordnet ist, und die Luftaustrittsöffnung (51) der Blasleitung (50) gegenüber dem anderen Ende der mindestens einen Sammelnut (3) beliebig zwischen dem ersten Ende (31) und dem zweiten Ende (32) angeordnet ist.

2. Bremssystem nach Anspruch 1,
**dadurch gekennzeichnet,**
**dass** weder die Saugleitung (40) noch die Blasleitung (50) in Kontakt mit dem Einsatz (2) des Belages (1) sind.

3. Bremssystem nach Anspruch 1 oder 2,
**dadurch gekennzeichnet,**
**dass** die Lufteintrittsöffnung (41) der Saugleitung (40) gegenüber dem zweiten Ende (32) angeordnet ist, und die Luftaustrittsöffnung (51) der Blasleitung (50) gegenüber dem ersten Ende (31) angeordnet ist.

4. Bremssystem nach Anspruch 3,
**dadurch gekennzeichnet,**
**dass** das erste Ende (31) am inneren Rand (23) mündet.

5. Bremssystem nach Anspruch 1 oder 2,
**dadurch gekennzeichnet,**
**dass** die Lufteintrittsöffnung (41) der Saugleitung (40) gegenüber dem ersten Ende (31) angeordnet ist, und die Luftaustrittsöffnung (51) der Blasleitung (50) gegenüber dem zweiten Ende (32) angeordnet ist.

6. Bremssystem nach Anspruch 5,
**dadurch gekennzeichnet,**
**dass** das zweite Ende (32) am äußeren Rand (24) mündet.

7. Bremssystem nach irgendeinem der Ansprüche 1 bis 6,
**dadurch gekennzeichnet,**
**dass** das Saugsystem eine Pumpe (60) und ein Filter (70) aufweist, wobei die Pumpe (60), das Filter (70), die Saugleitung (40) und die Blasleitung (50) einen durchgehenden Kreislauf bilden.

8. Bremssystem nach irgendeinem der Ansprüche 1 bis 7,
**dadurch gekennzeichnet,**
**dass** die mindestens eine Sammelnut (3) in der Nähe des hinteren Randes (21) angeordnet ist.

9. Bremssystem nach Anspruch 8,
**dadurch gekennzeichnet,**
**dass** der Einsatz (2) mit einer zweiten Sammelnut (3) versehen ist, die im Wesentlichen auf halber Distanz zwischen dem vorderen Rand (22) und dem hinteren Rand (21) angeordnet ist.

10. Bremssystem nach Anspruch 8 oder 9,
**dadurch gekennzeichnet,**
**dass** der Einsatz (2) mit einer Zusatznut (3) versehen ist, die in der Nähe des vorderen Randes (22) angeordnet ist.

## Claims

1. Braking system comprising a brake pad (10), said pad comprising a backing plate (1) with a first face (13) and a second face (14), and a lining (2) made of friction material and fixed to said first face (13), the lining (2) being delimited by a friction face (26), a mounting face (20), an inner edge (23), an outer edge (24), a rear edge (21), and a front edge (22), said lining (2) being provided with at least one collection groove (3) which is open to the friction face (26), and which has an opening at its first end (31) towards said inner edge (23) and has an opening at its second end (32) towards said outer edge (24), said braking system being **characterized in that** it further comprises a suction system which comprises a suction pipe (40) through which air is able to be sucked in, and a blow pipe (50) through which air is able to be blown, the air inlet orifice (41) of said suction pipe (40) being located opposite one end of said at least one groove (3), selected among said first end (31) and said second end (32), and the air outlet orifice (51) of said blow pipe (50) being located opposite the other end of said at least one groove (3), selected among said first end (31) and said second end (32).

2. Braking system according to claim 1, wherein neither the suction pipe (40) nor the blow pipe (50) are in contact with said lining (2) or said backing plate (1).

3. Braking system according to claim 1 or 2, wherein the air inlet orifice (41) of said suction pipe (40) is located opposite said second end (32), and the air outlet orifice (51) of said blow pipe (50) is located opposite said first end (31).

4. Braking system according to claim 3, wherein said first end (31) opens onto said inner edge (23).

5. Braking system according to claim 1 or 2, wherein the air inlet orifice (41) of said suction pipe (40) is located opposite said first end (31), and the air outlet orifice (51) of said blow pipe (50) is located opposite said second end (32).

6. Braking system according to claim 5, wherein said second end (32) opens onto said outer edge (24).

7. Braking system according to any one of claims 1 to 6, wherein said suction system comprises a pump (60) and a filter (70), said pump (60), said filter (70), said suction pipe (40), and said blow pipe (50) forming a continuous circuit.

8. Braking system according to any one of claims 1 to 7, wherein said at least one groove (3) is located near said rear edge (21).

9. Braking system according to claim 8, wherein said lining (2) is provided with a second groove (3) which is located substantially midway between said front edge (22) and said rear edge (21).

10. Braking system according to claim 8 or 9, wherein said lining (2) is provided with an additional groove (3) which is located near said front edge (22).
